# EUROPEAN PATENT SPECIFICATION

(11) **EP 1 725 399 B1**
(45) Date of publication and mention of the grant of the patent: **25.04.2012**
(21) Application number: 05725258.7
(22) Date of filing: 10.03.2005
(51) Int. Cl.: B32B 17/10, B32B 27/08, C09J 7/02, C09J 175/04

(54) **ADHESIVE SHEETS AND METHODS FOR THEIR USE**
KLEBEFOLIEN UND VERWENDUNGSVERFAHREN DAFÜR
FEUILLES ADHESIVES ET PROCEDES D'UTILISATION DE CELLES-CI

(30) Priority: 12.03.2004 US 800096
(43) Date of publication of application: 29.11.2006
(73) Proprietor: Nike International Ltd., Beaverton, Oregon 97005-6453 (US)
(72) Inventor: HOGAN, Richard M., Weldon Springs, Missouri 63304 (US); WRIGHT, John R., O'Fallon, Missouri 63366 (US); LIEBENO, Bret P., O'Fallon, Missouri 63366 (US)
(74) Representative: Price, Nigel John King
(86) International application number: PCT/US2005/007980
(87) International publication number: WO 2005/090071

(56) References cited:
- WO-A1-03/006240
- WO-A1-03/097346
- DE-U1- 29 510 400
- JP-A- 2000 335 644
- JP-A- 2001 031 451
- US-A- 3 524 778
- US-A- 4 010 311
- US-A- 4 173 672
- US-B1- 6 465 091
- US-B1- 6 562 276
- DATABASE WPI Week 198249 Thomson Scientific, London, GB; AN 1982-05599J XP002605205, -& JP 57 176126 A (SEKISUI CHEM IND CO LTD) 29 October 1982 (1982-10-29)

## Description

### FIELD OF THE INVENTION

The present invention relates to adhesive sheets containing a thermoplastic adhesive and a polymeric expendable layer. More specifically, the invention provides processes for manufacturing shatter resistant glass composites using the adhesive sheets to bond alternating layers of glass and thermoplastic.

### BACKGROUND OF THE INVENTION

Extruded adhesive sheets find application in many industrial areas. One such area is in the production of impact resistant glass or shatter resistant glass, which is made up of alternating layers of glass and a thermoplastic material held together by the adhesive sheets. Thermoplastic adhesives are suitable for use in such processes, as they are easy to work with in the lay up of the composite articles, and have suitable adhesive and other properties.

Extruded adhesive sheets may be prepared by conventional extrusion. The extruded sheet is typically calendared on a series of counterrotating die heat transfer rolls. Thereafter, the sheet is conveyed by a series of rollers to slitting operations, followed by winding onto reels for further use.

Thermoplastic polymers, such as those used in the adhesive described above, sometimes consist of formulations that exhibit characteristics that present challenges in the extrusion, film, calendaring and sheet manufacturing process. Certain characteristics of the polymers can limit production efficiency or increase manufacturing costs.

For example, thermoplastic polymers often exhibit a low extensional melt viscosity. Polymers that exhibit this property tend to sag between the die heat transfer rolls. This can result in lines in the extrudate from dragging across the bottom die lip or air entrapped between the extrudate and the heat transfer roll.

Other thermoplastic polymers exhibit high surface adhesion. Such polymers tend to adhere to one or more of the counter rotating heat transfer rolls. These results in poor or inconsistent cooling, poor pattern transfer from the heat transfer rolls, and surface defects on the extrudate due to inconsistent release. Special coatings are required on the conveyer idlers to prevent adhesion of the sheet or film product to the conveyer idler. The film or sheet product may adhere to itself during the reel take up and winding process resulting in some cases with a completely fused reel that cannot be unwound.

Thermoplastic polymers are also characterized by high extensibility. The solid sheet or film product stretches during the conveying, slitting, and winding operation. To compensate, extremely low inertia conveyer support rolls must be used, together with specialized slitting equipment and accurate winder tension control.

To address some of these difficulties, existing processes that extrude material with these properties often introduce an inter-leaf film prior to the winding or sheeting process. The inter-leaf film does not adhere to the product polymeric extrudate and prevents contact of the cooled solid sheet or film to itself, thereby preventing the material from blocking. However, equipment to pay out the inter-leaf film and wind up the product film or sheet requires expensive and precise tension and tracking mechanisms. Further, since the inter-leaf films are most often thin and easily melted, they generally are not introduced to the extruded material in the melt phase. As such, they do not provide any advantages for running low viscosity, high sag materials, nor do they prevent the extruded polymer from sticking to the calendar or sheet process heat transfer rolls.

It would be desirable to provide extruded thermoplastic polymers in a form that will allow problem free operation, despite the challenges recited above. It would further be desirable to use such polymeric forms to provide adhesive layers for such applications as making impact resistant glass.

US 4,010,311 discloses use of an anti-blocking agent when rolling up polyurethane sheet material. The rolls are commonly encased in a non-adherent protective material such as polyethylene to exclude dust.

WO 03/097346 discloses a process of decorating poly(vinyl butyral) (PVB) interlayer material by means of transfer printing.

US 3,524,778 discloses the use of polyethylene separating sheets for PVB.

JP 57-176126 discloses a co-extruded laminate of a first rollable and stretchable thermoplastic resin and a second ductile and stretchable thermoplastic resin which is not hot bonded with the first resin. The laminated film is stretched or drawn mono- or biaxially to provide laminated film comprising thin film of first thermoplastic resin and releasable film of the second thermoplastic resin.

JP 2000-335644 discloses a composite film from which a release film can be released after composite formation by co-extruding a polyurethane resin which becomes a cushioning film and a polyethylene resin which is rich in release properties to a polyurethane film and becomes and release film.

US 6,562,276 reports that a thin layer of polyethylene (Eastman Chemical Company CM 27057-F (2.0 MI)) was coextruded onto both sides of a PETG 6763 sheet.

### SUMMARY OF THE INVENTION

The invention provides a method of glazing by interposing sheet adhesive between glass and plastic layers, comprising: providing a first glass layer; preparing a first A-B film by a co-extruding an A-B-A laminate and removing one of the A layers, wherein each A layer is an expendable polymeric layer and the B layer is an adhesive; laying the first A-B film on the first glass layer with the B layer to the glass; removing the other A layer to expose the adhesive B layer; and laying a plastic layer on the adhesive layer, wherein the plastic layer has a first and second side, and wherein the first side is in contact with the adhesive.

In another embodiment, there is provided a co-extruded A-B-A composite sheet, wherein A is an expendable polymeric layer and B is a thermoplastic polyurethane adhesive layer.

In another embodiment, there is provided a method of preparing a multilayer plastic film comprising at least one thermoplastic polyurethane layer in contact with at least one polymeric expendable layer, comprising: co-extruding a sheet of thermoplastic polyurethane and a sheet of the polymeric expendable layer, wherein the multilayer plastic film comprises A-B-A, where B is the at least one thermoplastic polyurethane layer and A is the polymeric expendable layer.

In another embodiment, the invention provides a method for making a multilayer impact resistant glass composite, comprising the steps of: providing a glass layer; providing a plastic layer; interposing an adhesive between the glass layer and the plastic layer; pressing the layers together to adhere the glass layer to the plastic layer; wherein the step of interposing the adhesive comprises removing at least one polymeric expendable layer from an adhesive sheet, wherein the adhesive sheet is prepared by co-extruding a thermoplastic adhesive material and a polymeric material forming the polymeric expendable layer.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein
Figure 1 illustrates a 2-layer co-extruded product of the invention;
Figure 2 illustrates a 3-layer co-extruded product of the invention;
Figure 3 illustrates a 3-layer co-extruded product being calendared on heat transfer rolls;
Figure 4 illustrates downstream conveying, slitting, winding or other post-extrusion processes using a 3-layer co-extruded product of the invention;
Figure 5 illustrates the various layers involved in putting together an impact resistant glass composite of the invention; and

Figure 6 illustrates a multi-layer impact resistant glass composite of the invention after construction.

### DESCRIPTION OF PREFERRED EMBODIMENTS OF THE INVENTION

The following description of the preferred embodiment(s) is merely exemplary in nature and is in no way intended to limit the invention, its application, or uses.

In one aspect, the invention provides a method for preparing a multi-layer plastic film comprising at least one thermoplastic adhesive layer in contact with at least one polymeric expendable layer. The multi-layer plastic film is produced by coextruding a sheet of thermoplastic adhesive and a sheet of the polymeric expendable layer. In a preferred embodiment, the polymeric expendable layer comprises a polyolefin material such as polyethylene or polypropylene. A preferred thermoplastic adhesive layer is a thermoplastic polyurethane adhesive. In a preferred embodiment, the multi-layer plastic film is extruded as an A-B-A composite, wherein B is the adhesive layer and A represents the polymeric expendable layers.

The thickness of the co-extruded layers is not particularly limited by the invention. Depending on the application contemplated, the thermoplastic adhesive layer may vary over a wide range of thicknesses. For the application of producing shatter resistant or impact resistant multi-layer glass composites, it is convenient to use a thermoplastic adhesive layer such as thermoplastic polyurethane with an overall thickness from about 5 mils (0.005" or about 0.13 mm) to about 90 mils (0.09" or about 2.3 mm).

Similarly, the thickness of the co-extruded polymeric expendable layer is not particularly limited. For methods described below that involve laying the adhesive on a substrate and removing the polymeric expendable layer, it is convenient to use the polymeric expendable layer with sufficient thickness that its tensile strength is greater than the mechanical bond between it and the adhesive layer. In this application, the polymeric expendable layer will be readily peelable from the adhesive layer. For the application of manufacturing the multi-layer impact resistant glass composites, it is convenient to use polymeric expendable layers having a range of thickness of from about 0.003" up to about 0.01". Thicker polymeric expendable layers may be used; however, it is usually preferred to keep the thickness to about 0.01" in order to reduce costs and material waste.

Co-extrusion is the simultaneous extrusion of two or more polymers through a single die where the polymers are joined together such that they form distinct, well bonded layers forming a single extrusion product. Although relatively new, the process of co-extrusion is well described in the literature, for example in the book Polymer Extrusion by Chris Rauwendaal, pgs. 453-457, the complete disclosure of which is hereby incorporated by reference.

There are several techniques for co-extrusion. A first technique uses a feed block die where melt streams of the various polymers are combined in a relatively small cross section before entering the die. Co-extrusion with such a system is simple and relatively low cost, in that existing dies can be used with little or no modification. However, a drawback is that individual thickness control of the layers is difficult to achieve, there being only an overall thickness control.

A preferred co-extrusion technique involves the use of multimanifold internal dies. The different melt streams of the polymers making up the various layers enter the die separately and join together just before the orifice of the die. Such a process allows for a control of the thickness of the individual layers of the co-extruded product. Multimanifold co-extrusion machines are commercially available with a number of ports to support the production of a variety of co-extruded products. The number of ports available in a particular commercial piece of equipment is a matter of design. Commercially available coextruders are available with up to nine co-extrusion ports. The thickness of each layer co-extruded by up to nine ports in the commercial coextruders can be individually controlled. As a practical matter, it is common to co-extrude the same material in adjacent ports in order to build up a thickness. For example, a thicker layer may be produced by coextruding from three adjacent ports, while a thinner layer may be co-extruded with the thicker layer for co-extrusion from a single port adjacent to the three. Suitable co-extrusion equipment is commercially available from Dow Chemical, Extrusion Dies, Inc., Welex Extrusion Systems, PTI, American Kuhne, Merrit Davis Corporation, and Battenfeld Gloucester.

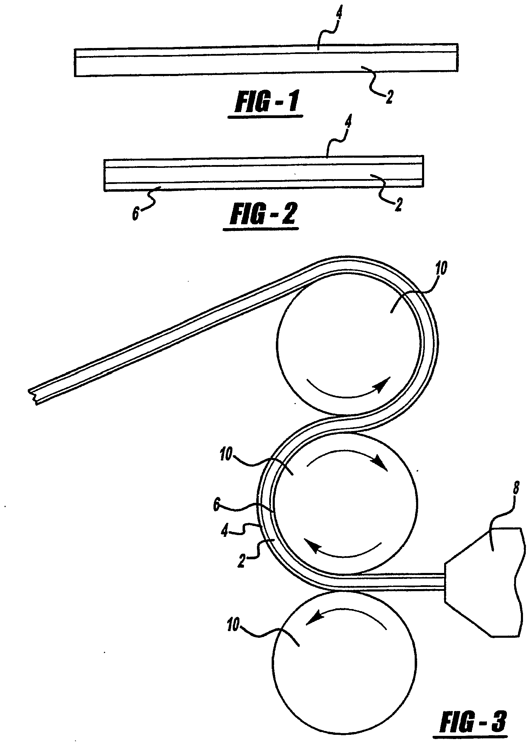

Figure 1 illustrates a 2-layer A-B composite sheet of the invention, where a polymeric expendable layer 4 is co-extruded on a thermoplastic adhesive layer 2. In a preferred embodiment, the expendable polymeric layer 4 is chosen for its physical properties including modulus and adhesive properties to the adhesive layer 2. In a preferred embodiment, the expendable polymeric layer adheres to the adhesive layer where there is enough strength to enable easy handling of the composite sheet during the co-extrusion process and the glazing process in which it is used. Preferably the expendable polymeric layer has a tensile strength greater than the mechanical bond between it and the adhesive layer. In this way, the polymeric expendable layer may be readily removed from the adhesive layer when called for in the glazing process.

Figure 2 illustrates a 3-layer co-extruded A-B-A composite sheet where an adhesive layer 2 is co-extruded with a first polymeric expendable layer 4 and a second polymeric expendable layer 6.

The polymeric expendable material is an extruded sheet produced from a thermoplastic polymer or blend of polymers having an advantageous combination of adhesive properties. The thermoplastic polymer should form a sheet that has sufficient adhesion to the adhesive layer to form a unitary co-extruded sheet that may be readily handled and used in the processes of the invention. On the other hand, the adhesion of the thermoplastic polymer to the adhesive layer should not be so great as to prevent its being readily removed when required. As a general rule, preferred thermoplastics for forming the expendable layer will be relatively low in polar groups that would tend to promote adhesion to the preferred thermoplastic polyurethane adhesive layers.

In a preferred embodiment, the polymeric expendable layer is made up of a polyolefin material. Polyolefins are polymers of monomers made up mostly or entirely of carbon and hydrogen, and preferably containing aliphatic repeating units for the most part. Examples of polyolefins include polyethylene and polypropylene. Among polyethylenes, a variety of materials are known, including high density polyethylene and low density polyethylene. Some suitable polyethylenes may contain an amount, usually a minor amount, of one or more comonomers. In a preferred embodiment, the comonomers are hydrocarbons. Examples include, without limitation, propylene, butylene and other C₃-C₈ olefins. In another embodiment, the polyolefin material may contain minor amounts of comonomers that have functional groups. Examples include without limitation acrylic monomers, styrene, acrylonitrile, and the like. When present, the comonomers containing functional groups are nevertheless present at low enough levels so as not to detrimentally change the adhesive properties of the polymeric expendable layer. In a preferred embodiment, the expendable polymeric layer comprises a polypropylene material. The polypropylene may be a homopolymer of propylene, or a copolymer of propylene and other hydrocarbon monomers.

In a preferred embodiment, the thickness of the expendable polymeric layer is from about 0.08 mm (0.003") up to about 0.25 mm (0.01"). Polymeric expendable layers having lesser thickness would tend to have such low modulus that there would be a risk they would tear rather than be removable from the adhesive layer. On the other hand, polymeric expendable layers of thickness greater than about 0.01" may be used in the invention. Generally, however, thicker polymeric layers do not significantly improve the extrusion properties, and so are less preferred because of the added expense.

In a preferred embodiment, the adhesive layer 2 is made up of a thermoplastic polyurethane adhesive. The thickness of the thermoplastic polyurethane layer is chosen for best results in the process contemplated for its use. For the glazing operation described below, it is convenient to choose the thermoplastic polyurethane adhesive layer with a thickness of from about 0.005"-0.09" (about 0.13 mm to about 2.3 mm).

The adhesion level between the expendable layer and the polymeric layer should be less than the cohesive strength of the expendable layer to prevent the polymeric layer from being contaminated with deposits from the expendable layer. Also, the adhesion level should not exceed the yield strength of the polymeric layer or cause distortion of the polymeric layer when separating the two layers.

In a preferred embodiment, the composite sheets of the invention are extruded through a sheet die and calendared on heat transfer rolls. Figure 3 illustrates the process whereby a 3-layer A-B-A composite of the invention are extruded from a sheet die 8 and calendared on heat transfer rolls 10. Figure 3 illustrates an advantage of the invention in that the rollers 10 are isolated from the adhesive layer 2 by the intervening polymeric expendable layers 4 and 6.

The adhesive layer may be made of one or more than one individual layers. The individual layers may be the same or different. For example, a plurality of identical adhesive sheets may be co-extruded together in order to build up a thickness. Alternatively, the adhesive layer may be made of a plurality of (preferably two) individuals. In one embodiment described below, the individual layers may have different adhesive properties - that is a first individual adhesive layer has a first set of properties, and a second individual adhesive layer has a second set of adhesive properties.

The adhesive layer may be any thermoplastic adhesive composition capable of being extruded into a sheet. For glazing operations, a preferred adhesive material is thermoplastic polyurethane adhesive. For extrusion into sheets, thermoplastic polyurethanes are provided as soluble polymers prepared by a reaction of a diisocyanate with a diol to obtain hydroxyl terminated polyurethane. Triols or higher functional hydroxyl components may be used, which introduces a slight amount of crosslinking into the thermoplastic polyurethane. The crosslinking if present is to be kept at a low enough level that the thermoplastic property of the material is retained.

Preferred diols include polyester diols prepared by condensation polymerization of diacid monomers with diol monomers. Such polyester polyols are well known in the art and are commercially available. The diacid monomers preferably contain from about 2-15 carbon atoms and are preferably saturated. Examples include without limitation malonic acid, succinic acid, glutaric acid, adipic acid, sebacic acid, and cyclohexane dicarboxylic acid. Diols include those having from about 2 to 15 carbon atoms and are also preferably saturated. Examples include without limitation ethylene glycol, propylene glycol, diethylene glycol, dipropylene glycol, 1,3-butylene glycol, 1,4-butanediol, 1,6-hexanediol, cyclohexanedimethanol, and neopentyl glycol. Triols may be included in a lesser amount than the diols and include without limitation, glycerol and trimethylolpropane. The polyester polyol generally has a number average molecular weight from about 500 to about 10,000.

To prepare the thermoplastic polyurethane adhesive composition, a polyisocyanate, preferably a diisocyanate, is reacted with the polyol composition such as the polyester polyol described above. The diol component is a provided in a slight excess, for example, on the order of 0.1% excess or more, in order to obtain a hydroxyl terminated polymer. The diisocyanate may be saturated or unsaturated, and contain aliphatic or cycloaliphatic groups. Although saturated diisocyanates are preferred in a sense because the resulting polyurethane polymers are more resistant to ultraviolet radiation, it is common to use aromatic diisocyanates in order to gain flexibility and to reduce cost. Saturated diisocyanates containing aliphatic or cycloaliphatic groups include without limitation isophorone diisocyanate, hexamethylene diisocyanate, and cyclohexane diisocyanate. A number of other diisocyanates are commercially available and may be used. Preferred aromatic diisocyanates include 4,4'-MDI, 2,4'-MDI, 2,4-TDI, and 2,6-TDI.

Thermoplastic polyurethane adhesives are commercially available. One example is TPU 2103-90AE sold by Dow. Other suppliers include BASF Corporation, Merquinsa, Bayer Corporation, Noveon, and Huntsman Chemical.

The expendable layer is selected for its rheological and other properties. As discussed above, preferred expendable layers include polyolefins such as polyethylene and polypropylene. As a practical matter, the expendable polymeric layer should be peelable. The tensile strength of the polymer expendable layer should be greater than the strength of the mechanical bond to the adhesive layer.

In one embodiment, the multilayer A-B or A-B-A coextruded sheets may be used in a process for making impact or shatter resistant glass. Impact resistant or shatter resistant glass generally consists of alternating glass and plastic layers held together with adhesives. The number of alternating glass and plastic layers, as well as the relative thickness of the glass and plastic may be varied according to the end use. Uses of such glass plastic composites range from shatter resistant windshields in automobiles to bullet-proof glass for banks or other commercial establishments. For shatter resistant windshields, the glass and plastic layers may be relatively thin. For bullet-proof applications, thicker glass and plastic layers would be chosen.

The adhesive layer of the current invention must provide a good bond between layers of dissimilar materials such as glass, polycarbonate and/or acrylic plastic. It must also be able to absorb large thermal and mechanical shocks common among security glazing. Furthermore, preferred adhesives should offer years of service life without delamination and provide ultraviolet screening protection. Furthermore, the preferred adhesives must remain tough and flexible over a wide temperature range. It has been found in the industry that thermoplastic polyurethane adhesive sheets possess suitable properties; accordingly thermoplastic polyurethane adhesives are used in glazing operation. Sheet adhesives for security glazing, not containing the co-extruded expendable layer or layers of the invention, are commercially available for example from Stephens urethane.

The plastic material in the impact or shatter resistant glass composite may be any material capable of withstanding the impact contemplated for the application. Generally, thermoplastic and thermoplastics may be used, with thermoplastic materials being preferred. Non-limiting examples of suitable thermoplastic materials include polycarbonates and polyacrylates. In a preferred embodiment, polycarbonate is used.

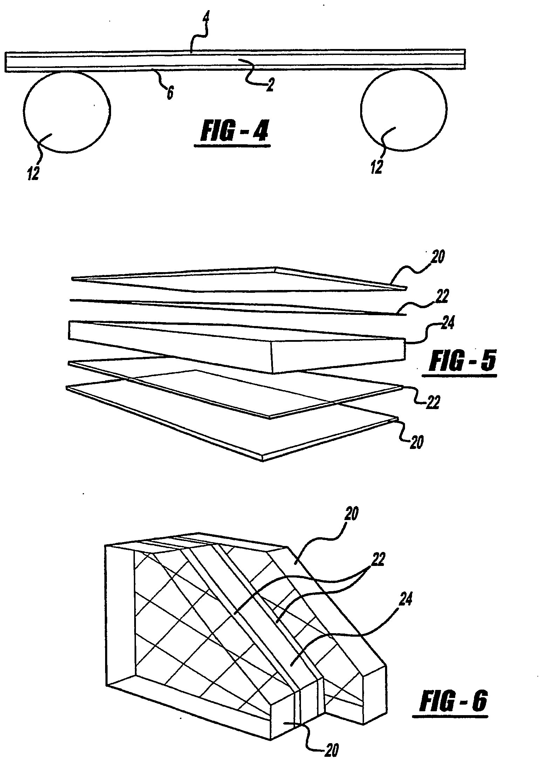

Figure 5 illustrates an impact or shatter resistant glass composite made according to the invention. Adhesive layers 22 are disposed between glass layers 20 and plastic layer 24.

Figure 6 shows a cross section and prospective view of a fully constructed laminated safety glass panel. Glass layers 20 are held in contact with a plastic layer 24 by intervening adhesive layers 22. In a non-limiting example of a process of glazing using the sheet adhesive of the invention, an A-B film is first applied to a glass layer with the B-layer to the glass. The B-layer is an adhesive material such as described above and A layer is an expendable polymeric layer. The A-B film may be produced by coextruding a single expendable layer A with an adhesive layer B. Alternatively, the film may be coextruded as an A-B-A 3-layer film, with one of the expendable layers being removed prior to laying the B side down on the glass. The expendable layer A is then removed to expose the adhesive layer. Next a plastic layer is laid on top of the glass containing the exposed adhesive layer. The plastic and glass layers are then bonded by applying vacuum (to help remove entrained air or other gases) and heating while applying pressure to the glass and plastic to adhere them one to the other.

Continuing, an A-B film produced as described above is then laid on the plastic with the B side to the plastic layer. The expendable polymeric layer A is then removed to expose the adhesive layer and a second glass layer is laid onto the exposed adhesive layer. The vacuum pressure and heating steps are repeated to bond the second glass layer to the plastic. The entire process may then be repeated until the desire number of layers of alternating glass and plastic material have been constructed.

Alternative processes are also possible. For example, the A-B film may be first applied to a plastic layer with the adhesive side down and the expendable layer removed. Thereafter, the glass layer may be laid onto the plastic layer and the layers sealed by applying vacuum and heating under pressure as described above. The process may continue by applying the A-B film to the opposite side of the plastic layer and removing the expendable layer. Thereafter the second glass layer may be applied to the plastic and sealed as before. In yet another alternative, the second glass layer may be prepared separately by applying the A-B film to the second glass layer with the adhesive side down. Then the expendable layer may be removed from the second glass layer. Then the second glass layer with the exposed adhesive may be applied to the previously formed glass plastic construction.

Other processes may also be used. Alternatively, at least some of the process steps described above may be automated.

Whether the adhesive layer is laid on a glass layer or a plastic layer, it is preferred to use enough adhesive sheets to cover the substrate allowing for example 1 to 5 mm of edge trim. In a preferred embodiment, the components of the laminate are laid up until the final ply, whether it is glass or another material. The edges and corners should be as flush as possible and the excess adhesive layer should be carefully trimmed away.

As mentioned above, the A-B or A-B-A composite co-extruded sheets of the invention may contain a plurality of individual adhesive layers B. In one embodiment, the B layer contains two individual layers of adhesive. The first individual layer may be a stronger adhesive than the second individual layer. In a preferred embodiment, the stronger adhesive comprises an aliphatic polyurethane adhesive, while the weaker adhesive comprises another thermoplastic polyurethane. In the glazing process, the sheets may be used in the following way. An A-B'-B" composite or a an A-B'-B"-A composite is prepared by coextrusion of the respective individual layers. In this embodiment, the co-extruded sheet is contacted with a sheet of glass comprising the outside glass layer of a laminated safety glass panel as shown in Figure 6. The B" layer is attached to the glass, and the expendable A layer is removed, exposing the weaker adhesive layer B'. A frame such as vinyl or aluminum is then applied by contact with the exposed B' layer, where the tacky B' layer provides some holding ability while the fabrication of the panel is completed. In a preferred embodiment, the adhesive layer B' may be made of the same material as the sealants in the frame.

The description of the invention is merely exemplary in nature and, thus, variations that do not depart from the gist of the invention are intended to be within the scope of the invention. Such variations are not to be regarded as a departure from the spirit and scope of the invention. The invention has been described above with respect to preferred embodiments. Further non-limiting description and illustration is given in the following Examples.

### Example 1 - co-extrusion with expendable layer on one side

A layer of aliphatic TPU was co-extruded with an expendable layer of high density polyethylene on one side. An A layer was made of Dow 12450N HDPE (0.08 mm (0.003")) and a B layer was made PE399-100 aliphatic TPU (0.8 mm (0.030")). Layers A and B were fed with heated extruders into a Cloeren 5 layer dual plane feed block having a BB-AAA plug with a temperature profile of 190°C (375°F).

The A layer extruder was a Davis Standard 38 mm (1.5") 24:1 UD air cooled electrically heated extruder. It was operated with a high work barrier screw and a UCC mixer. Screens were 20-40-60-80, and the temperature profiles were 190°C (375°F) in the barrel zone, gate, and adapters. The screw speed was 25 rpm and the barrel pressure was 3·1-3·5 MPa (450-500 psi). The motor load was 30-40%.

The B layer extruder was a Crown 90 mm (3.5") 32:1 UD air cooled electrically heated extruder. It was operated with a high work barrier screw and a UCC mixer. Screens were 20-40-60-80. The temperature profiles were 375°F in the gate, and adapters. In the barrel zones, the temperature profile was 174°C (345°F), 185°C (365°F), 190°C (375°F), 190°C (375°C), 190°C (375°C), 190°C (375°F), 190°C (375°C), and 190°C (375°). The screw speed was 10 rpm and the barrel pressure was 10·2-10·7 MPa (1480-1550 psi). The motor load was 30-40%.

From the feed block, the A and B layers were fed through a Cloeren Epoch II coextrusion sheet die. The co-extruded A-B system was taken up on a three roll down stack embossing roll stand and passed to two 2500 watt thermal slitters set at 30% power. The roll size was 305 mm (12 inch) diameter by a 760 mm (30 inch) face width. The roll type was a top matte finish, center matte finish, and bottom matte finish. Roll temperatures were top 29°C (85°F), center 24°C (75°F), and bottom 21°C (70°F). The roll gap was 0.7 mm (0.027 inch) and the roll speed was 1·8 m (6 feet) per minute.

### Example 2 - co-extrusion with expendable layer on both sides.

A sheet of tpu with expendable layers of HDPE on both sides was produced as an A-B-A structure. The B layer was PE399-100 aliphatic tpu (1·02 mm (0.040")), while each A layer was Dow 12450N HDPE (0·13 mm (0.005")). The width was 610 mm (24") finished.

The B layer extruder was a Davis Standard 38 mm (1.5") 24:1 L/D air cooled electrically heated extruder, operating with a high work barrier screw with a UCC mixer. The screens were 20-40-60-80 mesh. The temperature profile in the barrel zones, gate, and adapters was 190°C (375°F). The screw speed was 85 rpm, the barrel pressure was 4·8-5·2 MPa (700-750 psi), and the motor load was 60-70%.

The A layer extruder was a Crown 90 mm (3.5") 32:1 air cooled electrically heated extruder, operating with a high work barrier screw with a UCC mixer. Screens were 20-40-60-80 mesh. The temperature profiles were 190°C (375°F) in the gate, and adapters. In the barrel zones, the temperature profile was 174°C (345°F), 185°C (365°F), 190°C (375°F), 190°C (375°F), 190°C (375°C), 190°C (375°F), 190°C (375°F), and 190°C (375°F). The screw speed was 28 rpm and the barrel pressure was 11·7-12·1 mPa (1700-1750 psi). The motor load was 60-65%.

The feed block was a Cloeren 5 layer dual plane type with a BB-AAA plug and a temperature profile of 190°C (375°F). The co-extrusion die was a Cloeren Epoch II co-extrusion sheet die with a die gap of 1·3 mm (0.050"). The temperature profile was 196°C (385°F), 196°C (385°F), 196°C (385°F), 196°C (385°F) and 196°C (385°F).

The co-extruded A-B-A system was taken up on a three roll down stack embossing roll stand and passed to two 2500 watt thermal slitters set at 50% power. The roll size was 305 mm (12 inch) diameter by a 760 mm (30 inch) face width. The roll type was a top matte finish, center matte finish, and bottom matte finish. Roll temperatures were top 29°C (85°F), center 24°C (75°F), and bottom 21°C (70°F). The roll gap was 0·7 mm (0.027 inch) and the roll speed was 1·2 m (4 feet) per minute.

## Claims

1. A method of glazing by interposing sheet adhesive between glass and plastic layers, comprising:
providing a first glass layer;
preparing a first A-B film by a co-extruding an A-B-A laminate and removing one of the A layers, wherein each A layer is an expendable polymeric layer and the B layer is an adhesive;
laying the first A-B film on the first glass layer with the B layer to the glass;
removing the other A layer to expose the adhesive B layer; and
laying a plastic layer on the adhesive layer, wherein the plastic layer has a first and second side, and wherein the first side is in contact with the adhesive.

2. A method according to claim 1, further comprising the steps of:
preparing a second A-B film by co-extruding an A-B-A laminate and removing one of the A layers, wherein each A layer is an expendable polymeric layer and the B layer is an adhesive;
laying the second A-B film on the second side of the plastic layer with the B side to the plastic layer;
removing the other A layer of the second A-B film to expose the adhesive B layer of the second A-B film; and
laying a second glass layer on the exposed adhesive layer.

3. A method according to claim 1, wherein the adhesive layer has a thickness of 0.13-2.9 mm (0.005-0.090 inches).

4. A method according to claim 1, wherein the plastic layer comprises polycarbonate.

5. A method according to claim 1, wherein the plastic layer comprises a thermoplastic.

6. A co-extruded A-B-A composite sheet, wherein A is an expendable polymeric layer and B is a thermoplastic polyurethane adhesive layer.

7. A sheet according to claim 6, wherein the thermoplastic polyurethane layer has a thickness of 0.13-2.5 mm (0.005-0.1 inches).

8. A sheet according to claim 6, wherein the expendable polymeric layer has sufficient thickness so that tensile strength of the expendable polymeric layer is greater than the strength of the mechanical bond between the expendable polymeric layer and the thermoplastic polyurethane layer.

9. A method of preparing a multilayer plastic film comprising at least one thermoplastic polyurethane layer in contact with at least one polymeric expendable layer, comprising:
co-extruding a sheet of thermoplastic polyurethane and a sheet of the polymeric expendable layer,
wherein the multilayer plastic film comprises A-B-A, where B is the at least one thermoplastic polyurethane layer and A is the polymeric expendable layer.

10. A method according to claim 9, wherein the thermoplastic polyurethane layer has a thickness of 0.13-2.9 mm (0.005-0.090 inches).

11. A method for making a multilayer impact resistant glass composite, comprising the steps of:
providing a glass layer;
providing a plastic layer;
interposing an adhesive between the glass layer and the plastic layer;
pressing the layers together to adhere the glass layer to the plastic layer;
wherein the step of interposing the adhesive comprises removing at least one polymeric expendable layer from an adhesive sheet,
wherein the adhesive sheet is prepared by co-extruding a thermoplastic adhesive material and a polymeric material forming the polymeric expendable layer.

12. A method according to claim 11, wherein the adhesive sheet comprises a thermoplastic polyurethane layer in contact with a polyolefin layer, and wherein the tensile strength of the polyolefin layer is greater than the mechanical bond between the polyolefin and the thermoplastic polyurethane layer.

13. A method according to claim 12, wherein the polyolefin layer is on one side of the thermoplastic polyurethane layer.

14. A method according to claim 12, wherein the polyolefin layer is on both sides of the thermoplastic polyurethane layer.

15. A method according to any one of claims 1, 9 and 11 or a sheet according to claim 6, wherein the expendable layer comprises a polyolefin.

16. A method according to any one of claims 1, 9 and 11 or a sheet according to claim 6, wherein the expendable layer comprises polyethylene.

17. A method according to any one of claims 1, 9 and 11 or a sheet according to claim 6, wherein the expendable layer comprises polypropylene.

18. A method according to claim 1 or a sheet according to claim 6, wherein the adhesive layer comprises thermoplastic polyurethane.

19. A method according to claim 1 or claim 9, wherein the expendable polymeric layer has a thickness of 0.08-0.13 mm (0.003-0.005 inches).

20. A sheet according to claim 6, wherein the thermoplastic layer comprises a plurality of individual adhesive layers.

21. A sheet according to claim 6 or a method according to claim 9, wherein the expendable polymeric layer has a thickness of 0.08-0.25 mm (0.003-0.01 inches).

## Patentansprüche

1. Verfahren zum Glasieren durch Dazwischenfügen eines Klebstoffflächengebildes zwischen Glas und Kunststoffschichten, umfassend:
das Bereitstellen einer ersten Glasschicht;
das Herstellen einer ersten Folie A-B durch Coextrudieren eines Laminats A-B-A und Entfernen einer der Schichten A, wobei jede Schicht A eine polymere expandierbare Schicht ist und die Schicht B ein Klebstoff ist;
das Legen der ersten Folie A-B auf die erste Glasschicht mit der Schicht B zu dem Glas;
das Entfernen der anderen Schicht A, um die Klebstoffschicht B zu exponieren; und
das Legen einer Kunststoffschicht auf die Klebstoffschicht, wobei die Kunststoffschicht eine erste und zweite Seite aufweist und wobei die erste Seite mit dem Klebstoff in Kontakt ist.

2. Verfahren gemäß Anspruch 1, ferner umfassend die Schritte von:
Herstellen einer zweiten Folie A-B durch Coextrudieren eines Laminats A-B-A und Entfernen einer der Schichten A, wobei jede Schicht A eine polymere expandierbare Schicht ist und die Schicht B ein Klebstoff ist;
Legen der zweiten Folie A-B auf die zweite Seite der Kunststoffschicht mit der Seite B zu der Kunststoffschicht;
Entfernen der anderen Schicht A von der zweiten Folie A-B, um die Klebstoffschicht B der zweiten Folie A-B zu exponieren; und
Legen einer zweiten Glasschicht auf die exponierte Klebstoffschicht.

3. Verfahren gemäß Anspruch 1, wobei die Klebstoffschicht eine Dicke von 0,13 bis 2,9 mm (0,005 bis 0,090 Zoll) aufweist.

4. Verfahren gemäß Anspruch 1, wobei die Kunststoffschicht Polycarbonat umfasst.

5. Verfahren gemäß Anspruch 1, wobei die Kunststoffschicht einen Thermoplasten umfasst.

6. Coextrudiertes Verbundflächengebilde A-B-A, wobei A eine polymere expandierbare Schicht ist und B eine thermoplastische Polyurethan-Klebstoffschicht ist.

7. Flächengebilde gemäß Anspruch 6, wobei die thermoplastische Polyurethan-Schicht eine Dicke von 0,13 bis 2,5 mm (0,005 bis 0,1 Zoll) aufweist.

8. Flächengebilde gemäß Anspruch 6, wobei die polymere expandierbare Schicht eine ausreichende Dicke aufweist, so dass die Zugfestigkeit der polymeren expandierbare Schicht höher ist als die Festigkeit der mechanischen Bindung zwischen der polymeren expandierbare Schicht und der thermoplastischen Polyurethan-Schicht.

9. Verfahren zum Herstellen einer Mehrschicht-Kunststofffolie, umfassend mindestens eine thermoplastische Polyurethan-Schicht in Kontakt mit mindestens einer polymeren expandierbaren Schicht, umfassend:
das Coextrudieren eines Flächengebildes aus thermoplastischem Polyurethan und eines Flächengebildes aus der polymeren expandierbaren Schicht,
wobei die Mehrschicht-Kunststofffolie A-B-A umfasst, wobei B die mindestens eine thermoplastische Polyurethan-Schicht ist und A die polymere expandierbaren Schicht ist.

10. Verfahren gemäß Anspruch 9, wobei die thermoplastische Polyurethan-Schicht eine Dicke von 0,13 bis 2,9 mm (0,005 bis 0,090 Zoll) aufweist.

11. Verfahren zum Herstellen eines schlagfesten Mehrschicht-Verbundglases, umfassend die Schritte:
Bereitstellen einer Glasschicht;
Bereitstellen einer Kunststoffschicht;
Dazwischenfügen eines Klebstoffes zwischen die Glasschicht und die Kunststoffschicht;
Zusammenpressen der Schichten, um die Glasschicht an die Kunststoffschicht zu kleben;
wobei der Schritt des Dazwischenfügens des Klebstoffes das Entfernen von mindestens einer polymeren expandierbaren Schicht von einem Klebstoffflächengebilde umfasst,
wobei das Klebstoffflächengebilde durch Coextrudieren eines thermoplastischen Klebstoffmaterials und eines polymeren Materials hergestellt wird, wobei eine polymere expandierbaren Schicht gebildet wird.

12. Verfahren gemäß Anspruch 11, wobei das Klebstoffflächengebilde eine thermoplastische Polyurethan-Schicht in Kontakt mit einer Polyolefin-Schicht umfasst und wobei die Zugfestigkeit der Polyolefin-Schicht höher ist als die mechanische Bindung zwischen der Polyolefin- und der thermoplastischen Polyurethan-Schicht.

13. Verfahren gemäß Anspruch 12, wobei die Polyolefin-Schicht auf einer Seite der thermoplastischen Polyurethan-Schicht vorhanden ist.

14. Verfahren gemäß Anspruch 12, wobei die Polyolefin-Schicht auf beiden Seiten der thermoplastischen Polyurethan-Schicht vorhanden ist.

15. Verfahren gemäß einem der Ansprüche 1, 9 und 11 oder Flächengebilde gemäß Anspruch 6, wobei die expandierbaren Schicht ein Polyolefin umfasst.

16. Verfahren gemäß einem der Ansprüche 1, 9 und 11 oder Flächengebilde gemäß Anspruch 6, wobei die expandierbaren Schicht Polyethylen umfasst.

17. Verfahren gemäß einem der Ansprüche 1, 9 und 11 oder Flächengebilde gemäß Anspruch 6, wobei die expandierbaren Schicht Polypropylen umfasst.

18. Verfahren gemäß Anspruch 1 oder Flächengebilde gemäß Anspruch 6, wobei die Klebstoffschicht thermoplastisches Polyurethan umfasst.

19. Verfahren gemäß Anspruch 1 oder Anspruch 9, wobei die polymere expandierbaren Schicht eine Dicke von 0,08 bis 0,13 mm (0,003 bis 0,005 Zoll) aufweist.

20. Flächengebilde gemäß Anspruch 6, wobei die thermoplastische Schicht eine Vielzahl von einzelnen Klebstoffschichten umfasst.

21. Flächengebilde gemäß Anspruch 6 oder Verfahren gemäß Anspruch 9, wobei die polymere expandierbaren Schicht eine Dicke von 0,08 bis 0,25 mm (0,003 bis 0,01 Zoll) aufweist.

## Revendications

1. Procédé de vitrage par intercalage d'un adhésif en feuille entre des couches de verre et de matière plastique, comprenant :
la fourniture d'une première couche de verre ;
la préparation d'un premier film A-B par une co-extrusion d'un stratifié A-B-A et élimination d'une des couches A, dans lequel chaque couche A est une couche polymère expansible et la couche B est un adhésif ;
le dépôt du premier film A-B sur la première couche de verre avec la couche B sur le verre ;
l'élimination de l'autre couche A pour exposer la couche B d'adhésif ;
le dépôt d'une couche de matière plastique sur la couche d'adhésif, dans lequel la couche de matière plastique présente un premier et un second côtés, et dans lequel le premier côté est en contact avec l'adhésif.

2. Procédé selon la revendication 1, comprenant de plus les étapes :
de préparation d'un second film A-B par co-extrusion d'un stratifié A-B-A et élimination d'une des couches A, dans lequel chaque couche A est une couche polymère expansible et la couche B est un adhésif ;
le dépôt du second film A-B sur le second côté de la couche en matière plastique avec le côté B sur la couche de matière plastique ;
l'élimination de l'autre couche A du second film A-B pour exposer la couche B d'adhésif du second film A-B ; et
le dépôt d'une seconde couche de verre sur la couche adhésif exposée.

3. Procédé selon la revendication 1, dans lequel la couche d'adhésif présente une épaisseur de 0,13-2,9 mm (0,005-0,090 pouce).

4. Procédé selon la revendication 1, dans lequel la couche de matière plastique comprend du polycarbonate.

5. Procédé selon la revendication 1, dans lequel la couche de matière plastique comprend un thermoplastique.

6. Feuille composite A-B-A co-extrudée, dans laquelle A est une couche polymère expansible et B est une couche d'adhésif de polyuréthane thermoplastique.

7. Feuille selon la revendication 6, dans laquelle la couche de polyuréthane thermoplastique présente une épaisseur de 0,13-2,5 mm (0,005-0,1 pouce).

8. Feuille selon la revendication 6, dans laquelle la couche polymère expansible présente une épaisseur suffisante de sorte que la résistance à la traction de la couche polymère expansible est supérieure à la résistance de la liaison mécanique entre la couche polymère expansible et la couche de polyuréthane thermoplastique.

9. Procédé de préparation d'un film en matière plastique multicouche comprenant au moins une couche de polyuréthane thermoplastique en contact avec au moins une couche expansible polymère, comprenant :
la co-extrusion d'une feuille de polyuréthane thermoplastique et d'une feuille de la couche expansible polymère,
dans lequel le film en matière plastique multicouche comprend A-B-A, où B est la au moins une couche de polyuréthane thermoplastique et A est la couche expansible polymère.

10. Procédé selon la revendication 9, dans lequel la couche de polyuréthane thermoplastique présente une épaisseur de 0,13-2,9 mm (0,005-0,090 pouce).

11. Procédé de fabrication d'un composite de verre résistant aux chocs multicouche, comprenant les étapes :
de fourniture d'une couche de verre ;
de fourniture d'une couche de matière plastique ;
d'intercalage d'un adhésif entre la couche de verre et la couche de matière plastique ;
de compression des couches ensemble pour faire adhérer la couche de verre à la couche de matière plastique ;
dans lequel l'étape d'intercalage de l'adhésif comprend l'élimination d'au moins une couche expansible polymère d'une feuille d'adhésif,
dans lequel la feuille d'adhésif est préparée par co-extrusion d'un matériau d'adhésif thermoplastique et d'un matériau polymère formant la couche expansible polymère.

12. Procédé selon la revendication 11, dans lequel la feuille d'adhésif comprend une couche de polyuréthane thermoplastique en contact avec une couche de polyoléfine, et dans lequel la résistance à la traction de la couche de polyoléfine est supérieure à la liaison mécanique entre la polyoléfine et la couche de polyuréthane thermoplastique.

13. Procédé selon la revendication 12, dans lequel la couche de polyoléfine se trouve sur un côté de la couche de polyuréthane thermoplastique.

14. Procédé selon la revendication 12, dans lequel la couche de polyoléfine se trouve sur les deux côtés de la couche de polyuréthane thermoplastique.

15. Procédé selon l'une quelconque des revendications 1, 9 et 11 ou la feuille selon la revendication 6, dans lequel la couche expansible comprend une polyoléfine.

16. Procédé selon l'une quelconque des revendications 1, 9 et 11 ou la feuille selon la revendication 6, dans lequel la couche expansible comprend du polyéthylène.

17. Procédé selon l'une quelconque des revendications 1, 9 et 11 ou la feuille selon la revendication 6, dans lequel la couche expansible comprend du polypropylène.

18. Procédé selon la revendication 1 ou la feuille selon la revendication 6, dans lequel la couche d'adhésif comprend du polyuréthane thermoplastique.

19. Procédé selon la revendication 1 ou la revendication 9, dans lequel la couche polymère expansible présente une épaisseur de 0,08-0,13 mm (0,003-0,005 pouce).

20. Feuille selon la revendication 6, dans lequel la couche thermoplastique comprend plusieurs couches individuelles d'adhésif.

21. Feuille selon la revendication 6 ou procédé selon la revendication 9, dans lequel la couche polymère expansible présente une épaisseur de 0,08-0,25 mm (0,003-0,01 pouce).
